# EUROPEAN PATENT SPECIFICATION

(11) **EP 2 866 583 B1**
(45) Date of publication and mention of the grant of the patent: **25.05.2016**
(21) Application number: 13727567.3
(22) Date of filing: 30.05.2013
(51) Int. Cl.: A23D 7/005, A23L 11/00, A23L 29/212, A23L 29/238

(54) **EDIBLE OIL-IN-WATER EMULSION**
ESSBARE ÖL-WASSER-EMULSION
ÉMULSION HUILE DANS EAU COMESTIBLE

(30) Priority: 27.06.2012 EP 12173807
(43) Date of publication of application: 06.05.2015
(73) Proprietor: Unilever N.V., 3013 AL Rotterdam (NL); Unilever PLC, London, Greater London EC4Y 0DY (GB)
(72) Inventor: BENJAMIN, Mia Claire, NL-3133 AT Vlaardingen (NL); BIALEK, Jadwiga Malgorzata, NL-3133 AT Vlaardingen (NL); VERSLUIS, Pieter, NL-3133 AT Vlaardingen (NL); VREEKER, Robert, NL-3133 AT Vlaardingen (NL)
(74) Representative: Wurfbain, Gilles L.
(86) International application number: PCT/EP2013/061165
(87) International publication number: WO 2014/001016

(56) References cited:
- WO-A1-01/52670
- WO-A1-2012/089448
- JP-A- 2010 259 399
- KASPER L R: "Chickpea mayonnaise with sweet-tart onions and basil", INTERNET CITATION, 13 August 2008 (2008-08-13), page 1, XP002632920, Retrieved from the Internet: URL:http://www.startribune.com/lifestyle/t aste/recipes/26906864.html [retrieved on 2011-04-14]
- PAPALAMPROU EVDOXIA M ET AL: "Effect of medium molecular weight xanthan gum in rheology and stability of oil-in-water emulsion stabilized with legume proteins", JOURNAL OF THE SCIENCE OF FOOD AND AGRICULTURE, vol. 85, no. 12, September 2005 (2005-09), pages 1967-1973, XP002681880, ISSN: 0022-5142
- ASLI CAN KARACA ET AL: "Emulsifying properties of chickpea, faba bean, lentil and pea proteins produced by isoelectric precipitation and salt extraction", FOOD RESEARCH INTERNATIONAL, ELSEVIER APPLIED SCIENCE, BARKING, GB, vol. 44, no. 9, 2 June 2011 (2011-06-02), pages 2742-2750, XP028304134, ISSN: 0963-9969, DOI: 10.1016/J.FOODRES.2011.06.012 [retrieved on 2011-06-28]
- HARNSILAWAT THEPKUNYA ET AL: "Stabilization of model beverage cloud emulsions using protein-polysaccharide electrostatic complexes formed at the oil-water interface", JOURNAL OF AGRICULTURAL AND FOOD CHEMISTRY, vol. 54, no. 15, July 2006 (2006-07), pages 5540-5547, XP002681881, ISSN: 0021-8561
- DICKINSON E: "Interfacial structure and stability of food emulsions as affected by protein-polysaccharide interactions", SOFT MATTER, ROYAL SOCIETY OF CHEMISTRY, CAMBRIDGE, GB, vol. 4, no. 5, 1 January 2008 (2008-01-01) , pages 932-942, XP008124336, ISSN: 1744-683X, DOI: 10.1039/B718319D [retrieved on 2008-02-29]
- DE JONG ET AL: "Charge density of polysaccharide controls microstructure and large deformation properties of mixed gels", FOOD HYDROCOLLOIDS, ELSEVIER BV, NL, vol. 21, no. 7, 6 April 2007 (2007-04-06), pages 1172-1187, XP022023398, ISSN: 0268-005X, DOI: 10.1016/J.FOODHYD.2006.09.004
- NOR HAYATI I ET AL: "Droplet characterization and stability of soybean oil/palm kernel olein O/W emulsions with the presence of selected polysaccharides", FOOD HYDROCOLLOIDS, ELSEVIER BV, NL, vol. 23, no. 2, 1 March 2009 (2009-03-01), pages 233-243, XP026128612, ISSN: 0268-005X, DOI: 10.1016/J.FOODHYD.2008.01.004 [retrieved on 2008-01-25]

## Description

### TECHNICAL FIELD OF THE INVENTION

The present invention relates to an edible oil-in-water emulsion of neutral pH that comprises gelatinized starch, pulse seed albumin and a non-starch polysaccharide thickening agent of low charge density (e.g. HM pectin, guar gum or xanthan gum). Examples of edible emulsions encompassed by the present invention include creams, soups, sauces, dips, desserts and drinks.

The invention also provides a process for the manufacture of the aforementioned oil-in-water emulsion and a method of preparing a food product comprising the oil-in-water emulsion, said method comprising heating the food product to a temperature in excess of 90°C.

### BACKGROUND OF THE INVENTION

The emulsion stability of oil-in-water emulsions is affected adversely by a number of different changes that may occur in the structure of these emulsions as time progresses.

There are basically five ways in which the structure of an emulsion of liquid droplets in a continuous medium can change:
1. *Creaming*/*Sedimentation*: No change in droplet size (or droplet size distribution), but build-up of an equilibrium droplet concentration gradient within the emulsion. This phenomenon results from external force fields, usually gravitational, acting on the system. "Creaming" is the special case in which the droplets collect in a concentrated layer at the top of an emulsion. "Sedimentation" occurs when the droplets collect in a concentrated layer at the bottom of the emulsion.
2. *Flocculation:* Again, no change in basic droplet size or distribution but the build-up of aggregates of droplets within the emulsion. The individual droplets retain their identity. This process of flocculation results from the existence of attractive forces between the droplets.
3. *Coalescence:* Flocculated droplets in the bulk of the emulsion, or alternatively, droplets within a close-packed array resulting from sedimentation or creaming, coalesce to form larger droplets. This results in a change of the initial droplet size distribution. The limiting state here is the complete separation of the emulsion into the two immiscible bulk liquids. Coalescence thus involves the elimination of the thin liquid film (of continuous phase) which separates two droplets in contact in an aggregate or a close-packed array. The forces to be considered here are therefore the forces acting within thin-liquid films in general.
4. *Ostwald ripening:* An alternative way in which the average droplet size in an emulsion can increase, without the droplets coalescing, occurs if the two liquids forming the disperse phase and the continuous phase, respectively, are not totally immiscible. This is the case in reality because all liquid pairs are mutually miscible to some finite extent. If one starts with a truly monodisperse emulsion system, then no effects arising from this mutual solubility will arise. However, if the emulsion is polydisperse, larger droplets will form at the expense of the smaller droplets owing to the process known as Ostwald Ripening. In principle, the system will tend to an equilibrium state in which all the droplets attain the same size (this may be, of course, that state when we have just one single large drop). The process of Ostwald ripening results from the difference in solubility between small and large droplets.
5. *Phase inversion:* A further way in which the structure of an emulsion may change is for the emulsion to "invert", e.g. for an o/w emulsion to change to a w/o emulsion. This may be brought about by a change in temperature or concentration of one of the components or by the addition of a new component to the system.
6. *Syneresis:* Yet another way in which emulsions may change is the separating off of one of the main liquid components of the emulsion. In oil-in-water emulsions both oil syneresis and water syneresis may occur.

When oil-in-water emulsions are stored for prolonged periods of time under varying temperature conditions, as is the case for retail products such as dressings and mayonnaise, the aforementioned destabilizing processes have to be slowed down. In order to achieve this, emulsifiers and water structuring agents are commonly employed in these emulsions.

Phospholipids are an example of an emulsifier that is widely used to stabilize oil-in-water emulsions. Egg yolk contains appreciable levels of phospholipids and is widely used as an oil-in-water emulsifier, e.g in mayonnaise and dressings.

Examples of water structurants include modified celluloses, starches (modified or non-modified), gums such as xanthan, agar, gelatin, carrageenan (iota, kappa, lambda), Gellan, galactomannans (guar, tara, cassia, locust bean gum), konjac glucomannan, gum arabic, pectins, milk proteins, alginate, chitosan and cellulosic fibres.

WO 01/52670 describes a food product comprising a starch and protein derived from a pea or lentil flour, wherein the flour starch has been at least partially gelatinized and the flour protein has been at least partially denatured and coagulated. Protein coagulation is achieved by inclusion of a protein coagulating agent, especially a calcium or magnesium salt. It is stated that thickening agents may be added to enhance texture characteristics, minimise syneresis and to prevent sedimentation. Beta-glucans, carrageenan, xanthan and other gums, pectin, guar, locust and kon-jac are mentioned as examples of thickening agents. Example 10 describes the preparation of oil-and-water emulsions containing 16.7 wt.% raw pea flour, 13.3 wt.% canola oil, 0-1 wt.% locust bean gum and 1 wt.% calcium sulphate. As shown in Comparative Example C, these emulsions were neither pourable or spoonable and had a dough-like consistency.

US 2007/0269580 describes a food composition comprising: a legume product; and an ingredient selected from the group consisting of a monoglyceride, a soluble fiber, a sweetener, sodium stearoyl lactylate, glucono delta lactone, calcium citrate, and combinations of any thereof. Example 1 describes a dip containing oil, soluble fiber, monglycerides, sweeteners, whole soybean powder, methyl cellulose, pectin, xanthan gum, sodium citrate, salt, wheat starch and food acids.

EP-A 0 319 064 describes a process for the preparation of an oil-in-water emulsion comprising:
- at least partly gelatinizing a native starch based thickening agent;
- incorporating a phospholipoprotein containing material which has been modified by phospholipase A;
- incorporating the required amount of oil or fat; and
- homogenizing.

Papalamprou et al. (J Sci Food Agric 85:1967-1973 (2005)) describe the effect of medium molecular weight xanthan gum on rheology and stability of oil-in-water emulsions (pH 5.5 or 7.0) stabilized with legume proteins. The article describes a study that compared and evaluated the emulsifying properties of oil-in-water (30:70 v/v) emulsions stabilized with lupin and soya protein isolates and medium molecular weight xanthan gum. The addition of xanthan gum in the emulsion formulation was found to enhance emulsion stability through the phenomenon of thermodynamic incompatibility with the legume protein, resulting in an increase of the adsorbed protein at the interface. The emulsion stability is also enhanced by a network structure built by the polysaccharide in the bulk phase.

A. Can Karaca et al. (Emulsifying properties of chickpea, faba bean, lentil and pea proteins produced by isoelectric precipitation and salt extraction, Food Research Int. 44 (2011) 2742-2750) describes the preparation of oil-in-water emulsions using protein solutions (0.25% w/w) and flaxseed oil. The protein isolates used in the preparation of these protein solutions contained 72.64-88.76% protein and 0.02-13.74% carbohydrate.

### SUMMARY OF THE INVENTION

The inventors have found that stable oil-in-water emulsions of neutral pH having a very smooth texture and high heat stability can be produced by employing gelatinized starch, pulse seed albumin and a non-starch polysaccharide of low charge density. More particularly, the inventors have developed an oil-in-water emulsion having a very smooth texture and excellent heat stability, said emulsion comprising 3-60 wt.% of a dispersed oil phase and 40-97 wt.% of a continuous aqueous phase having a pH of 5.2-8.0, said emulsion containing by weight of aqueous phase:
- 0.5-5 wt.% of gelatinized starch;
- 0.05-2 wt.% of pulse seed albumin; and
- 0.1-2 wt.% of a non-starch polysaccharide of low charge density, wherein the non-starch polysaccharide of low charge density is selected from high methoxyl pectin, guar gum, xanthan gum and combinations thereof,
wherein the emulsion is pourable or spoonable, and
wherein the term polysaccharide of low charge density refers to the polysaccharide containing less than 0.48 mol charge per mol monosaccharide at a pH in the range of 5.2 to 8.0,
wherein the oil-in-water emulsion is obtainable according to the process according to the invention.

Due to their heat stability, the emulsions according to the present invention can suitably be used as e.g. cooking creams.

Although the inventors do not wish to be bound by theory, it is believed that the gelatinized starch provides water structuring properties; that the pulse seed albumin provides emulsifying properties; and that interaction of the non-starch polysaccharide of low charge density with the pulse seed albumin enhances the smoothness and the heat stability of the emulsion. The non-starch polysaccharide of low charge density is believed to be thermodynamically incompatible with the legume protein, resulting in an increase of the adsorbed albumin at the oil-water interface. The emulsion stability may additionally be enhanced by a network structure built by the non-starch polysaccharide in the bulk phase.

Examples of non-starch polysaccharides of low charge density include HM pectin, guar gum and xanthan gum. The inventors have found that unlike polysaccharides of high charge density (e.g. kappa-carragenan and LM pectin) polysaccharides of low charge density are capable of stabilising the oil-in-water emulsions of the present invention.

Attraction and repulsion are the two major types of interactions that occur between proteins and polysaccharides in solution and can result in complex formation or immiscibility of the two biopolymers (thermodynamic incompatibility). Owing to polyelectrolyte interactions in solutions, these interactions and their consequences on the mixture are dependent on pH, ionic strength, conformation, charge density and the concentration of the biopolymers.

A blend of two different biopolymers in aqueous solution behaves in mainly three ways:
1) co-solubility
2) incompatibility
3) complex coacervation

In case biopolymers are thermodynamically incompatible, demixing of the biopolymers occurs. In case of the present emulsion, demixing of the non-starch polysaccharide and the pulse seed albumin causes the protein to settle at the oil-water interface whereas the non-starch polysaccharide together with the gelatinized starch occupies the interstitial aqueous phase. This demixing can fixate the pulse seed albumin at the oil-water interface in such a strong way that the emulsion does not even destabilize when it is heated to very high temperatures, e.g. in an oven.

The present invention also provides a process of preparing an oil-in-water emulsion, wherein the oil-in-water emulsion comprises 3-60 wt.% of a dispersed oil phase and 40-97 wt.% of a continuous aqueous phase having a pH of 5.2-8.0, said emulsion containing by weight of aqueous phase:
- 0.5-5 wt.% of gelatinized starch;
- 0.05-2 wt.% of pulse seed albumin; and
- 0.1-2 wt.% of a non-starch polysaccharide of low charge density,
wherein the non-starch polysaccharide of low charge density is selected from high methoxyl pectin, guar gum, xanthan gum and combinations thereof,
wherein the emulsion is pourable or spoonable, and
wherein the term polysaccharide of low charge density refers to the polysaccharide containing less than 0.48 mol charge per mol monosaccharide at a pH in the range of 5.2 to 8.0, said process comprising combining:
- finely ground pulse seed;
- non-starch polysaccharide of low charge density;
- water;
- oil; and
- optionally further ingredients,
wherein the finely ground pulse seed is combined with water and heated to at least 80°C for at least 1 minute before the oil is added; and
wherein the non-starch polysaccharide is added after the heating and prior to the oil addition.
In the present process the finely ground pulse seed provides both the seed pulse albumin and at least a part of the gelatinized starch.

The present invention enables the preparation of emulsions that are heat-stable. Thus, another aspect of the invention relates to a method of preparing a food product comprising 1-100 wt.% of an oil-in-water emulsion as defined herein before, said method comprising heating the food product to a temperature in excess of 90°C for at least 5 minutes.

### DETAILED DESCRIPTION OF THE INVENTION

Accordingly, one aspect of the invention relates to and oil-in-water emulsion comprising 3-60 wt.% of a dispersed oil phase having a pH of 5.2-8.0 and 40-97 wt.% of a continuous aqueous phase, said emulsion containing by weight of aqueous phase:
- 0.5-5 wt.% of gelatinized starch;
- 0.05-2 wt.% of pulse seed albumin; and
- 0.1-2 wt.% of a non-starch polysaccharide of low charge density,
wherein the non-starch polysaccharide of low charge density is selected from high methoxyl pectin, guar gum, xanthan gum and combinations thereof,
wherein the emulsion is pourable or spoonable, and
wherein the term polysaccharide of low charge density refers to the polysaccharide containing less than 0.48 mol charge per mol monosaccharide at a pH in the range of 5.2 to 8.0,
wherein the oil-in-water emulsion is obtainable by the process according to the invention.

The term "starch" as used herein, unless indicated otherwise, refers to native, non-modified, starch. Starch consists of two types of molecules: the linear and helical amylose and the branched amylopectin.

The term "gelatinized starch" as used herein refers to starch that has undergone gelatinization. Starch gelatinization is a process that breaks down the intermolecular bonds of starch molecules in the presence of water and heat, allowing the hydrogen bonding sites to engage more water. This irreversibly dissolves the starch granule. Penetration of water increases randomness in the general starch granule structure and decreases the number and size of crystalline regions. Under the microscope in polarized light starch loses its birefringence and its extinction cross during gelatinization. Some types of unmodified native starches start swelling at 55 °C, other types at 85 °C. The gelatinization temperature depends on the degree of cross-linking of the amylopectin.

The term "protein" as used herein refers to a linear polypeptide comprising at least 10 amino acid residues. Preferably, said protein contains more than 20 amino acid residues. Typically, the protein contains not more than 35,000 amino acid residues.

The term "albumin" as used herein refers to a protein that is soluble in water and in moderately concentrated salt solutions and that experiences heat coagulation. Reference is made to the Osborne protein classification system (T.B. Osborne, The Vegetable Proteins, Monographs in Biochemistry (London; Longmans, Green and Co., 1924.

The term "globulin" as used herein refers to a protein that is insoluble in water, but soluble in saline solutions.

The term "pulse" as used herein refers to an annual leguminous crop yielding from one to twelve seeds of variable size, shape, and colour within a pod and is reserved for crops harvested solely for the dry seed. This excludes fresh beans and fresh peas, which are considered vegetable crops. Also excluded are crops that are mainly grown for oil extraction (oilseeds like soybeans and peanuts), and crops which are used exclusively for sowing (clovers, alfalfa). Just like words such as "bean" and "lentil", the word "pulse" may also refer to just the seed, rather than the entire plant.

The term "oil" as used herein refers to lipids selected from the group of triglycerides, diglycerides, monoglycerides, phospholipids and free fatty acids. The term "oil" encompasses lipids that are liquid at ambient temperature as well as lipids that are partially or wholly solid at ambient temperature.

The term "polysaccharide of low charge density" refers to a polysaccharide that contains no more than a limited number of anionic and/or cationic charges at a pH in the range of 5.2 to 8.0. More particularly, the latter term refers to a polysaccharide that contains less than 0.48 mol charge (negative or positive) per mol monosaccharide at a pH in the range of 5.2 to 8.0, especially in the range of 5.8-7.5, more particularly in the range of 6.5-7.2.

The term "pectin" as used herein refers to polysaccharides, that are rich in galacturonic acid including:
- Homogalacturonans: linear chains of α-(1-4)-linked D-galacturonic acid.
- Substituted galacturonans: characterized by the presence of saccharide appendant residues (such as D-xylose or D-apiose in the respective cases of xylogalacturonan and apiogalacturonan) branching from a backbone of D-galacturonic acid residues.
- Rhamnogalacturonan I: contain a backbone of the repeating disaccharide: 4)-α-D-galacturonic acid-(1,2)-α-L-rhamnose-(1. From many of the rhamnose residues, sidechains of various neutral sugars branch off. The neutral sugars are mainly D-galactose, L-arabinose and D-xylose, with the types and proportions of neutral sugars varying with the origin of pectin.
- Rhamnogalacturonan II: a less frequent complex, highly branched polysaccharide. Rhamnogalacturonan II is classified by some authors within the group of substituted galacturonans since the rhamnogalacturonan II backbone is made exclusively of D-galacturonic acid units.
In nature, around 80 percent of carboxyl groups of galacturonic acid are esterified with methanol. This proportion is decreased to a varying degree during pectin extraction. Pectins are classified as high- vs. low-ester pectins (short HM vs. LM-pectins), with more or less than half of all the galacturonic acid esterified.

The term "dietary fiber" as used herein refers to indigestible non-starch polysaccharides such as arabinoxylans, cellulose, lignin, pectins and beta-glucans.

The term "sugars" as used herein refers to mono- and disaccharides.

The term "diameter" as used herein in relation to the droplet size of the dispersed oil phase, unless otherwise specified, refers to the diameter as determined with the help of confocal laser scanning microscopy.

The "finely ground pulse seed" of the present invention is suitably produced by milling or grinding dehulled or non-dehulled pulse seeds. The pulse seeds may be milled or ground as such, or they may be milled or ground in the presence of water, e.g. to produce an aqueous slurry or paste.

The non-starch polysaccharide of low charge density preferably has a charge density of less than 0.45, more preferably of less than 0.40 and most preferably of less than 0.3 at a pH in the range of 5.8-7.5. Below the charge densities of some polysaccharides are mentioned:
- Guar gum: charge density = 0
- Xanthan gum: charge density = 0.25
- HM pectin (DE 72%): charge density = 0.28

This data can be found in S. de Jong et al., Charge density of polysaccharide controls microstructure and large deformation properties of mixed gels, Food Hydrocolloids 21 (2007) 1172-1187.

The non-starch polysaccharide of low charge density comprised in oil-in-water emulsion according to the present invention is preferably selected from HM pectin, guar gum, xanthan gum and combinations thereof. According to a particularly preferred embodiment the non-starch polysaccharide is selected from HM pectin, guar gum, xanthan gum and combinations thereof. The non-starch polysaccharide is preferably derived from a natural source other than pulse seed.

Starch (gelatinized and non-gelatinized) and the pulse seed albumin are typically contained in the present emulsion in a weight ratio of 30:1 to 1:1, more preferably in a weight ratio of 20:1 to 2:1 and most preferably in a weight ratio of 15:1 to 3:1.

The starch contained in the oil-in-water emulsion preferably is largely gelatinized. Typically, 50-100 wt.%, more preferably 70-100 wt.% and most preferably 90-100 wt.% of the starch contained in the emulsion is gelatinized. Gelatinized starch is believed to enhance the emulsion stability by structuring the continuous aqueous phase of the emulsion. The extent to which the starch present in the emulsion is gelatinized can suitably be determined by cross polarised light microscopy.

The present emulsion typically contains 0.08-1.5%, preferably 0.1-1.0% and most preferably 0.15-0.5% pulse seed albumin by weight of aqueous phase.

Besides pulse seed albumin the present emulsion may suitably contain other pulse seed proteins. Typically, the emulsion contains 0.2-5%, more preferably 0.4-4% and most preferably 0.6-2% of pulse seed proteins by weight of aqueous phase.

Globulin is a pulse seed protein that is preferably contained in the emulsion besides pulse seed albumin. Preferably, the emulsion contains 0.15-3.75%, more preferably.

0.3-3.0% and most preferably 0.45-1.5% pulse seed globulin by weight of aqueous phase.

Typically, starch (gelatinized and non-gelatinized) and pulse seed protein are contained in the present emulsion in a weight ratio of 1:2 to 6:1 more preferably in a weight ratio of 1:1 to 3:1.

The combination of oil, water, starch, pulse seed protein and non-starch polysaccharide polysaccharide of low charge density typically constitutes at least 90 wt.%, more preferably at least 95 wt.% and most preferably at least 97 wt.% of the present emulsion.

According to a particularly preferred embodiment of the invention, the gelatinized starch and the pulse seed albumin contained in the emulsion originate from the same pulse seed. Even more preferably, the pulse seed protein and the gelatinized starch contained in the emulsion originate from the same pulse seed.

The finely ground pulse that is employed in accordance with the present invention may be obtained from dehulled and/or non-dehulled pulse seed. The water-structuring and emulsifying properties of the finely ground pulse seed are believed to be largely attributable to the starch and protein components. Since the hulls of pulse seed predominantly consist of dietary fibre, dehulling does not significantly affect the functionality of the finely ground seed in the present emulsion. Preferably, the finely ground pulse seed employed is obtained from dehulled pulse seed.

Typically, the (ground) pulse seed employed in accordance with the present invention contains less than 25%, most preferably less than 20% of dietary fiber by weight of dry matter.

The oil content of the pulse seed preferably lies in the range of 0.8-8 wt.%.

Globulins and albumins typically represent a major part of the protein contained in the pulse seed. Accordingly, in a preferred embodiment, globulins and albumins represent at least 50 wt.%, more preferably 55-95 wt.% and most preferably 60-90 wt.% of the protein contained in the pulse seed.

Emulsions of particular good quality can be obtained if the pulse seed contains globulins and albumins in a weight ratio that lies within the range of 10:1 to 1:1, or even more preferably in a weight ratio of 7:1 to 2:1.

In accordance with another preferred embodiment the globulins legumin and vicilin together represent at least 35 wt.%, more preferably 40-75 wt.% and most preferably 45-70 wt.% of the protein comprised in the pulse seed.

The protein glutelin preferably represents 5-30 % by weight, more preferably 8-25 % by weight of the protein comprised in the pulse seed.

The content of globulin, albumin, legumin, vicilin, and glutelin in the pulse seeds of the present invention is suitably determined by the method described by Gupta & Dhillon [Gupta, R., & Dhillon, S. 1993. Characterization of seed storage proteins of Lentil (Lens culinaris M.). Annals of Biology, 9, 71-78].

The protein provided by the finely ground pulse seed preferably comprises not more than a minor amount of sizeable coagulated protein aggregates. Typically, the finely ground pulse seed comprises 0-1 wt.% of coagulated protein aggregates having a hydrated diameter of at least 1.0 µm. The hydrated diameter can suitably be determined by Confocal Scanning Laser Microscopy with Nile Blue as fluorescent dye.

The protein contained in the emulsion preferably is largely denatured, e.g. as a result of heat treatment. Preferably, 60-100 wt.%, more preferably at least 90-100 wt.% of the protein comprised in the finely ground pulse seed is denatured.

It is important that the pulse seed employed in the present emulsion is finely ground in order to release starch, protein and dietary fiber from the seed material. Advantageously, the finely ground pulse seed contains less than 10 wt.%, more preferably less than 5 wt.% and most preferably less than 1 wt.% of particles having a hydrated diameter of 200 µm or more. The hydrated diameter of the finely ground pulse seed is suitably determined by means of Confocal Scanning Laser Microscopy, using the fluorescent dye Acridine Orange.

According to yet another preferred embodiment, the emulsion contains 1-18%, calculated as dry matter, by weight of aqueous phase of finely ground pulse seed. The requirement that the present emulsion contains 1-10% of finely ground pulse seed, calculated as dry matter, by weight of aqueous phase should be construed as: 1% < (parts by weight of dry matter of finely ground pulse seed)/(parts by weight of aqueous phase) < 10%; wherein the aqueous phase, besides water, includes the part of the finely ground pulse seed that is contained therein, as well as other components (e.g. acidulant) that are contained therein.

Even when used in relatively low concentrations, the finely ground pulse seed of the present invention is capable of substantially improving the stability of the oil-in-water emulsion. Accordingly, the finely ground pulse seed preferably represents not more than 15%, more preferably not more than 12%, most preferably not more than 8% of the oil-in-water emulsion, calculated as dry matter by weight of aqueous phase. Typically, the finely ground pulse seed is employed in a concentration of at least 1.2%, even more preferably of at least 1.5% and most preferably of at least 1.8%, where the percentages are again calculated as dry matter by weight of the aqueous phase

The pulse seed from which the albumin and starch originate typically contains starch and protein in a weight ratio of 1:2 to 5:1, more preferably of 1:1 to 5:2.

The aforementioned pulse seed typically has the following composition, calculated on dry matter:
30-60 wt.% of starch;
1-40 wt.% of dietary fiber;
0.5-12 wt.% of sugars;
15-35 wt.% of protein;
0.8-12 wt.% of oil;
wherein the pulse seed contains starch and protein in a weight ratio of 2:3 to 3:1.

Typically, starch, dietary fiber, sugars, protein and oil together make up 90-100 wt.%, more preferably 95-100 wt.% of the dry matter contained in the pulse seed.

The finely ground pulse seed comprised in the present emulsion is advantageously obtained from a pulse selected from lentils, chickpeas, beans and combinations thereof. Even more preferably, the finely ground pulse seed is obtained from a pulse selected from lentils, chickpeas, mung beans and combinations thereof. Most preferably, the finely ground pulse seed is finely ground lentils.

The present emulsion typically has a pH in the range of 5.7 to 7.8. More preferably, the pH of the emulsion is the range of 5.9 to 7.5, most preferably of 6.0 to 7.2.

As described in WO 01/52670, divalent metal ions, such as Ca²⁺ and Mg²⁺ may induce protein gelation. In order to prevent this kind of protein gelation, it is preferred that the aqueous phase of the present emulsion comprises less than 1.0 mmol per gram of protein, more preferably less than 0.5 mmol per gram of protein of divalent metal cation selected from Ca²⁺, Mg²⁺ and combinations thereof. According to another preferred embodiment the present emulsion is not in the form of a gel (as opposed to the products described in WO 01/52670).

The emulsion of the present invention preferably contains no modified starch. The term "modified starch" as used herein refers to an enzymatically or chemically modified starch.

The emulsions according to the present invention are pourable or spoonable as opposed to solid. In case the present emulsion is non-pourable, it is preferred that the consistency of the emulsion is such that it cannot be cut into two parts that remain separate but will confluence after the cutting. Most preferably, the present emulsion is pourable.

The present emulsion typically has a Stevens value at 5 °C of 0-100 g, more preferably of 0-50 g and most preferably of 0.5-30g. The Stevens value, expressed in grams, can be determined by using a typical mayonnaise grid in a Stevens LFRA Texture Analyzer (ex. Stevens Advanced Weighing Systems, UK) with a maximum load/measuring range of 1000 grams and by applying a penetration test of 20 mm at 1 mm/s penetration rate in a cup having a diameter of 65 mm. The mayonnaise grid comprises square openings of appr. 3x3 mm, is made up of wire with a thickness of appr. 1 mm and has a diameter of 40 mm.

The oil-in-water emulsion of the present invention preferably has a shear storage modulus G', measured at 5°C, within the range of 5-1000 Pa, most preferably in the range of 10-500 Pa.

The viscosity of the present emulsion typically lies in the range of 20-20,000 mPa.s, more preferably in the range of 400-12,000 mPa.s at 10 s⁻¹ and 5°C.

The shear storage modulus G' is the mathematical description of an object or substance's tendency to be deformed elastically (i.e., non-permanently) when a force or a deformation is applied to it. The term "storage" in shear storage modulus refers to the storage of energy applied to the sample. The stored energy is recovered upon the release of the stress or strain. The shear storage modulus of an oil-in-water emulsion is suitably determined by dynamic oscillatory measurements, where the shear strain is varied (from low to high strain) in a sinusoidal manner at a frequency of 1 Hz. The resulting stress and the phase shift between the stress and strain is measured. From the amplitude of the stress and strain and the phase angle (phase shift) the shear storage modulus is calculated. Alternatively, instead of varying the shear strain the shear stress can be set and the shear strain measured. If the experiment is performed correctly, this should yield a similar result. Unless indicated otherwise, these measurements are performed at 5°C using a cone-plate geometry (cone: 40 cm diameter, 2 degrees, sand blasted). Herein, the G' (Pa) is taken at the plateau value at low strain (linear viscoelastic region). For this measurement a suitable, state of the art rheometer can be used (e.g. TA AR2000EX, United Kingdom).

Unless indicated otherwise, the term "viscosity" refers to the viscosity of the present emulsion at 10 s⁻¹ and 5°C. This viscosity is suitably determined using a TA AR 2000EX rheometer (cone plate geometery, 40 mm diameter, 2 degrees, sand blasted).

The cone starts rotating from 0.1 s⁻¹ shear rate and ramps up to a shear rate of 1000 s⁻¹ in 3 min. By way of comparison, the viscosity values refer to the shear rate of 10 s⁻¹.

The dispersed oil phase typically contains 50-100 wt.%, more preferably 70-100 wt.% and most preferably 90-100 wt.% of triglycerides.

The melting point of the dispersed oil phase typically does not exceed 65°C, more preferably it is in the range of 16-60°C and most preferably in the range of 25-55°C.

The dispersed oil phase comprised in the present emulsion preferably represents 4-50 wt.%, more preferably 5-40 wt.% and most preferably 10-30 wt.% of the emulsion. The continuous aqueous phase preferably represents 40-97 wt.%, more preferably 60-95 wt.% and most preferably 70-90 wt.% of the emulsion.

Typically, 80-100 vol.% of the oil droplets contained in the present emulsion have a diameter of less than 15 µm, more preferably of 0.5-10 µm.

The edible emulsion may suitably contain one or more additional ingredients besides water, oil and ground pulse seed. Examples of such optional ingredients include acidulant, salt, spices, vitamins, flavouring, colouring, preservatives, antioxidants, chelators herbs and pieces of meat, vegetable or cheese. Such optional additives, when used, collectively, typically do not make up more than 20%, more preferably not more than 10% and most preferably not more than 5% by weight of the emulsion.

Examples of edible oil-in-water emulsions according to the present invention include creams, soups, sauces, dips, desserts and drinks. Preferably, the present emulsion is a cream, most preferably a cooking cream.

The emulsion according to the present invention typically have a shelf-life of at least 4, more preferably at least 8 weeks under refrigerated conditions (5°C).

Another aspect of the invention relates to a process of preparing an oil-in-water emulsion as defined herein before, said process comprising combining:
- finely ground pulse seed;
- non-starch polysaccharide of low charge density;
- water;
- oil; and
- optionally further ingredients.

According to a particularly preferred embodiment, the finely ground pulse seed is obtained from a pulse seed selected from lentils, chickpeas, beans and combinations thereof. Even more preferably, the ground pulse seed is obtained from a pulse seed selected from lentils, chickpeas, mung beans and combinations thereof. Most preferably, the ground pulse seed is ground lentil.

It was found that a particularly stable emulsion can be produced by combining the finely ground pulse seed and water and heating the resulting combination to denature the protein before adding the oil. Thus, prior to the addition of oil, the combination of the finely ground pulse seed and water is heated to a temperature of at least 80°C for at least 1 minute. Preferably the heating conditions employed are sufficient to denature at least 50 wt.%, more preferably at least 70 wt. and most preferably 90 wt.% of the pulse seed protein contained therein.

The inventors have further found that it is advantageous to add the non-starch polysaccharide of low charge density before the oil is added. The non-starch polysaccharide of low charge density may be added to the finely ground pulse seed and water before or after heating. Preferably, the non-starch polysaccharide is added after the heating.

The oil-in-water emulsion of the present invention is suitably produced by:
- providing an aqueous dispersion containing at least 1 wt.% of finely ground pulse seed and at least 0.1 wt.% of non-starch polysaccharide,
- adding oil to the aqueous dispersion to produce an oil-and-water mixture; and
- mixing the oil-and-water mixture to produce an oil-in-water emulsion comprising 80-100 vol.% of oil droplets having a diameter of less than 20 µm.

The starch provided by the pulse seed component may suitably be gelatinized by heating the aqueous dispersion containing finely ground pulse seed to a temperature in excess of 60°C for a sufficiently long period of time. It is also possible to prepare the aqueous dispersion of finely ground pulse seed from a pulse flour that has been pretreated to gelatinize the starch.

Preferably, the present process comprises the step of heating the aqueous dispersion containing the finely ground pulse seed to gelatinize the starch contained therein. Depending on the heating temperature, the preferred times are as follows:
80-100°C: 1-70 minutes
100-120°C: 30-1200 seconds
120-150°C: 10-480 seconds

According to a particularly preferred embodiment 50-100 wt.%, more preferably 70-100 wt.% of the starch comprised in the aqueous dispersion is gelatinized prior to the addition of the oil.

The pulse flour that is mixed with water to prepare the aqueous dispersion preferably has the same composition as described herein before in relation to the pulse seed that is contained in the edible oil-in-water emulsion of the present invention.

In the present process the aqueous dispersion is suitably prepared by mixing pulse flour with water and optionally further ingredients. Preferably, the pulse flour employed has a mass weighted average particle size of 10-500 µm, more preferably of 15-120 µm, and containing more than 90 wt.% of particles, preferably more than 95 wt.% of particles having a diameter of 150 µm or less. The particle size distribution of the pulse flour is suitably determined with the help of sieves.

Yet another aspect of the present invention relates to a method of preparing a food product comprising 1-100 wt.% of an oil-in-water emulsion as defined herein before, said method comprising heating the food product to a temperature in excess of 90°C for at least 5 minutes.

In accordance with one advantageous embodiment of the present process the food product is a composite foodstuff comprising a food substrate and the oil-in-water emulsion in a weight ratio of 80:20 to 99:1. The food substrate may be selected from, for example, meat, fish, shellfish, shrimps, pies, vegetables and combinations thereof.

The composite foodstuff is suitably prepared by applying the oil-in-water emulsion onto the food substrate before the heating, e.g by pouring the emulsion over the food substrate or by spreading it onto said substrate.

The composite food product is preferably heated by grilling or by heating in an oven or a microwave. Most preferably, the composite food product is heated by grilling or in an oven.

In accordance with another advantageous embodiment, the food product is heated to sterilize or pasteurize the emulsion. Most preferably, the food product is pasteurized or sterilized by heating the food product to a temperature of at least 95°C, most preferably of at least 100°C.

The invention is further illustrated by means of the following non-limiting examples.

### EXAMPLES

### Example 1

An oil-in-water emulsion according to the present invention was prepared on the basis of the recipe shown in Table 1.

**Table 1**

| Component | Ingredients | Wt.% | Grams |
|---|---|---|---|
| Slurry of lentil flour | Lentil flour | 4.00 | 16.0 |
| | Tap water | 36.00 | 144.0 |
| Solution of non-starch polysaccharide | High methoxyl pectin | 1.00 | 4.0 |
| | Tap water | 44.30 | 177.2 |
| Oil blend | Sunflower oil | 7.35 | 29.4 |
| | Hardstock fat | 7.35 | 29.4 |

➢ Milled dehulled red lentil (AS Besin Gida San. Tic Ltd.,Turkey) having a particle size of less than 200 µm
➢ The high methoxyl pectin (Grindsted pectin AMD 783) was obtained from Danisco and had a DE of 72%
➢ The hardstock fat employed was an interesterified fat blend having a slip melting point of approximately 45°C. The solid fat content at 20°C (N₂₀) was 37% and the solid fat content at 35°C (N₃₅) was 10%

The emulsion was prepared using the following procedure:
- Disperse lentil flour into cold water, using a whisk
- Stir the blend to fully disperse the flour
- Heat to 85-90°C in a water-bath, using a paddle to prevent cooking onto base and sides.
- Heat for 5 min at 85-90°C, using paddle to prevent cooking onto base and sides.
- Re-weigh to determine water loss & compensate by adding water.
- Cool to 40°C.
- Disperse non-starch polysaccharide very slowly into cold water with a high speed magnetic stirrer.
- Mix the lentil slurry with the solution of non-starch polysaccharide.
- Heat oil and hard-fat to 40-45°C.
- Gradually add the oil mixture in 2 minutes to the aqueous phase while mixing with Silverson at 6500rpm, using an attachment with smallest holes
- Continue mixing for 1 minute after the oil mixture has been added
- Fill the emulsion into a glass jar and store the closed jar at 5°C

After 7 days storage at the samples were evaluated. The product was found to be homogeneous, smooth and glossy; the appearance was similar to that of a thick pouring cream.

Rheological measurements after 14 days storage at 5°C yielded the data presented in Table 2.

**Table 2**

| | |
|---|---|
| Stevens hardness (5°C) in grams | 11 |
| Viscosity (5°C) in mPa.s | 8,000 |
| G'(5°C) in Pa | 414 |
| G' (85°C) in Pa | 35 |
| G' (5°C after heating to 85°C) in Pa | 90 |

### Example 2

Example 1 was repeated, except that this time 0.5 wt.% guar gum (obtained from Willy Benecke GmbH, Germany)was used instead of 1.0 wt.% high methoxyl pectin.

After 7 days storage at 5°C the product was found to be homogeneous, smooth and glossy; the appearance was similar to that of a thick pouring cream and similar to that of the emulsion of Example 2.

The rheological measurements yielded the data shown in Table 3.

**Table 3**

| | |
|---|---|
| Stevens hardness (5°C) in grams | 6 |
| Viscosity (5°C) in mPa.s | 3,400 |
| G'(5°C) in Pa | 134 |
| G' (85°C) in Pa | 35 |
| G' (5°C after heating to 85°C) in Pa | 137 |

### Example 3

Example 1 was repeated, except that this time 0.25 wt.% xanthan gum (Keltro RD, supplier CP Kelpo) was used instead of 1.0 wt.% high methoxyl pectin.

After 7 days storage at 5°C the product was found to be homogeneous, smooth and glossy; the appearance was similar to that of a thick pouring cream.

The rheological measurements after 14 days storage at 5°C yielded the data shown in Table 4.

**Table 4**

| | |
|---|---|
| Stevens hardness (5°C) in grams | 9 |
| Viscosity (5°C) in mPa.s | 3,100 |
| G'(5°C) in Pa | 167 |
| G' (85°C) in Pa | 29 |
| G' (5°C after heating to 85°C) in Pa | 102 |

### Example 4

The heat stability of the emulsions described in Examples 1 to 4 was tested as follows:
Test 1:
   - Approximately 25g of the emulsion was placed into aluminium foil dishes and placed into a pre-heated oven of 95°C. Samples were evaluated after 75 minutes in the oven.
Test 2:
   - 25-27g sliced pre-cooked potatoes (5-8mm thick) were placed into the aluminium foil dishes. Then 10g of emulsion was spooned / poured over this layer.
   - A second layer of 23-25g potatoes was laid over the first layer.
   - Then a final 15g of emulsion was spooned / poured over second layer.
   - The dishes were placed into a pre-heated oven at 180°C.
   - The temperature dropped slightly to 160°C and took about 10 minutes to reach 180°C again.
   - The potato dishes were then cooked a further 25 minutes.

None of the samples showed any instability or break-up after having been subjected to tests 1 and 2. In test 2, all samples showed very nice even browning. The browning of the emulsions containing guar gum or xanthan gum was found to be somewhat better than that of the other emulsions.

### Example 5

Example 1 was repeated, except that this time coconut oil was employed as the hardstock fat.

After 3 days storage at 5°C the product was found to be homogeneous with no syneresis or phase separation. The product was pourable and had a very smooth texture.

The rheological measurements (after 3 days at 5°C) yielded the data shown in Table 5.

**Table 5**

| | |
|---|---|
| Stevens hardness (5°C) in grams | 15 |
| Viscosity (5°C) in mPa.s | 6,400 |
| G'(5°C) in Pa | 74 |

### Example 6

Example 5 was repeated, except that this time yellow pea flour was used instead of lentil flour.

After 3 days storage at 5°C the product was found to be homogeneous with no syneresis or phase separation. The product had the consistency of a cuttable gel, similar to quark or crème fraiche.

The rheological measurements (after 3 days at 5°C) yielded the data shown in Table 6.

**Table 6**

| | |
|---|---|
| Stevens hardness (5°C) in grams | 17 |
| Viscosity (5°C) in mPa.s | 3,600 |
| G'(5°C) in Pa | 65 |
| G' (85°C) in Pa | 5.0 |
| G' (5°C after heating to 85°C) in Pa | 23.6 |

### Example 7

Example 5 was repeated, except that this time chickpea flour was used instead of lentil flour.

After 3 days storage at 5°C the product was found to be nomogeneous with no syneresis or phase separation. The product was pourable and had a very smooth texture.

The rheological measurements (after 3 days at 5°C) yielded the data shown in Table 7.

**Table 7**

| | |
|---|---|
| Stevens hardness (5°C) in grams | 7 |
| Viscosity (5°C) in mPa.s | 4,200 |
| G'(5°C) in Pa | 31 |
| G' (85°C) in Pa | 3.6 |
| G' (5°C after heating to 85°C) in Pa | 23.7 |

### Example 8

The heat stability of the emulsions described in Examples 5, 6 and 7 was tested as follows:
- 14.5-16.5g sliced pre-cooked potatoes (5-8mm thick) were placed into aluminium foil dishes in two layers. 8g of emulsion was spooned / poured over each potato layer.
- The dishes were placed into a pre-heated oven at 180°C for 30 minutes.

None of the samples showed any instability or break-up during oven heating. All samples showed very nice even browning.

### Comparative Example A

Example 1 was repeated, except that this time 0.25 wt.% of a mixture of kappa- and iota-carrageenan (charge density > 0.5) was used instead of 1.0 wt.% high methoxyl pectin.

After storage at 5°C, the emulsion had become a heterogeneous gel that did not flow and was surrounded in water. After gently mixing with a spoon for a few seconds, cracks developed in the product.

Rheological measurements yielded the data shown in Table 8.

**Table 8**

| | |
|---|---|
| Stevens hardness (5°C) in grams | 54 |
| Viscosity (5°C) in mPa.s | 12,000 |
| G'(5°C) in Pa | 1315 |
| G' (85°C) in Pa | 46 |
| G' (5°C after heating to 85°C) in Pa | 490 |

### Comparative Example B

Example 1 was repeated, except that this time 1.0 wt.% low methoxyl pectin (DE =32%) was used instead of 1.0 wt.% high methoxyl pectin.

After 10 days storage at 5°C the product had destabilised, showing a roughened texture. The rheological measurements yielded the data shown in Table 9.

**Table 9**

| | |
|---|---|
| Stevens hardness (5°C) in grams | 6 |
| Viscosity (5°C) in mPa.s | 2,050 |
| G'(5°C) in Pa | 116 |
| G' (85°C) in Pa | 39 |
| G' (5°C after heating to 85°C) in Pa | 64 |

### Comparative Example C

Example 10 of WO 01/52670 was reproduced as follows:
- 25 gram yellow pea flour was added to 100 ml warm tap water (47°C) using a magnetic stirrer. The mixture was heated in a microwave oven operated at low power to 60°C with occasional stirring; cooking time ca. 3 minutes;
- the flour mixture was added to 18.4 grams (= 20 ml) rapeseed oil in a Waring blender and mixed for 2 minutes at the highest blending speed. 1.5 gram locust bean gum (from Ceratonia siliqua seeds, Sigma-Aldrich Co) was added and blending continued for another 2 minutes at the highest speed;
- the mixture was heated to 85°C in a microwave oven operated at low power (cooking time ca. 7 minutes). The mixture was stirred with a spatula every 5-10°C temperature rise.
- 1.5 gram calcium sulfate dihydrate (1.4 mmol/gram protein) was dispersed in 2 ml water and added to the mixture; the mixture was stirred thoroughly with a spatula;
- after cooling down to room temperature the mixture was placed in a fridge at 5°C

The emulsion so obtained was a very thick, paste-like material that is neither pourable nor spoonable. The texture was found to be similar to that of processed cheese or bread dough.

Rheological analysis of the emulsion (after 24 hours at 5°C) yielded the date shown in Table 10.

**Table 10**

| | |
|---|---|
| Stevens hardness (5°C) in grams | 1,042 |
| G'(5°C) in Pa | 29,500 |

Viscosity could not be measured because the sample did not flow.

From optical micrographs it was established that the emulsion contained oil droplets having a diameter of 10-20 µm.

## Claims

1. A process of preparing an oil-in-water emulsion,
wherein the oil-in-water emulsion comprises 3-60 wt.% of a dispersed oil phase and 40-97 wt.% of a continuous aqueous phase having a pH of 5.2-8.0, said emulsion containing by weight of aqueous phase:
• 0.5-5 wt.% of gelatinized starch;
• 0.05-2 wt.% of pulse seed albumin; and
• 0.1-2 wt.% of a non-starch polysaccharide of low charge density,
wherein the non-starch polysaccharide of low charge density is selected from high methoxyl pectin, guar gum, xanthan gum and combinations thereof,
wherein the emulsion is pourable or spoonable, and
wherein the term polysaccharide of low charge density refers to the polysaccharide containing less than 0.48 mol charge per mol monosaccharide at a pH in the range of 5.2 to 8.0, said process comprising combining:
• finely ground pulse seed;
• non-starch polysaccharide of low charge density;
• water;
• oil; and
• optionally further ingredients,
wherein the finely ground pulse seed is combined with water and heated to at least 80°C for at least 1 minute before the oil is added; and
wherein the non-starch polysaccharide is added after the heating and prior to the oil addition.

2. Process according to claim 1, wherein the finely ground pulse seed is obtained from a pulse seed selected from lentils, chickpeas, beans and combinations thereof.

3. An oil-in-water emulsion comprising 3-60 wt.% of a dispersed oil phase and 40-97 wt.% of a continuous aqueous phase having a pH of 5.2-8.0, said emulsion containing by weight of aqueous phase:
• 0.5-5 wt.% of gelatinized starch;
• 0.05-2 wt.% of pulse seed albumin; and
• 0.1-2 wt.% of a non-starch polysaccharide of low charge density,
wherein the non-starch polysaccharide of low charge density is selected from high methoxyl pectin, guar gum, xanthan gum and combinations thereof,
wherein the emulsion is pourable or spoonable, and
wherein the term polysaccharide of low charge density refers to the polysaccharide containing less than 0.48 mol charge per mol monosaccharide at a pH in the range of 5.2 to 8.0,
wherein the oil-in-water emulsion is obtainable by the process according to claim 1 or 2.

4. Emulsion according to claim 1, wherein the gelatinized starch and the pulse seed albumin originate from the same pulse seed.

5. Emulsion according to any one of the preceding claims, wherein starch and the pulse seed albumin are contained in the emulsion in a weight ratio of 30:1 to 1:1.

6. Emulsion according to any one of the preceding claims, wherein the emulsion contains 1-18%, calculated as dry matter, by weight of the aqueous phase of finely ground pulse seed.

7. Emulsion according to claim 6, wherein the pulse seeds are selected from lentils, chickpeas, beans and combinations thereof.

8. Emulsion according to any one of the preceding claims, wherein 50-100 wt.% of the starch comprised in the emulsion is gelatinized starch.

9. Emulsion according to any one of the preceding claims, wherein the emulsion contains 0.15-3.75 wt.%, of pulse seed globulin.

10. A method of preparing a food product comprising 1-100 wt.% of an oil-in-water emulsion, said method comprising heating the food product to a temperature in excess of 90°C for at least 5 minutes,
wherein the oil-in-water emulsion comprises 3-60 wt.% of a dispersed oil phase and 40-97 wt.% of a continuous aqueous phase having a pH of 5.2-8.0, said emulsion containing by weight of aqueous phase:
• 0.5-5 wt.% of gelatinized starch;
• 0.05-2 wt.% of pulse seed albumin; and
• 0.1-2 wt.% of a non-starch polysaccharide of low charge density, and
wherein the term polysaccharide of low charge density refers to the polysaccharide containing less than 0.48 mol charge per mol monosaccharide at a pH in the range of 5.2 to 8.0.

11. Use of an oil-in-water emulsion for preparing a composite foodstuff, said use comprising heating a combination of a food substrate and the emulsion to a temperature in excess of 90°C for at least 5 minutes,
wherein the oil-in-water emulsion comprises 3-60 wt.% of a dispersed oil phase and 40-97 wt.% of a continuous aqueous phase having a pH of 5.2-8.0, said emulsion containing by weight of aqueous phase:
• 0.5-5 wt.% of gelatinized starch;
• 0.05-2 wt.% of pulse seed albumin; and
• 0.1-2 wt.% of a non-starch polysaccharide of low charge density, and
wherein the term polysaccharide of low charge density refers to the polysaccharide containing less than 0.48 mol charge per mol monosaccharide at a pH in the range of 5.2 to 8.0.

## Patentansprüche

1. Verfahren zur Herstellung einer Öl-in-Wasser-Emulsion,
wobei die Öl-in-Wasser-Emulsion 3-60 Gew.-% einer dispergierten Ölphase und 40-97 Gew.-% einer kontinuierlichen wässrigen Phase mit einem pH von 5,2-8,0 umfasst, wobei die Emulsion, bezogen auf das Gewicht der wässrigen Phase, enthält:
• 0,5-5 Gew.-% gelatinierte Stärke,
• 0,05-2 Gew.-% Albumin von Hülsenfrüchtesamen und
• 0,1-2 Gew.-% eines Nicht-Stärke-Polysaccharids niedriger Ladungsdichte,
wobei das Nicht-Stärke-Polysaccharid niedriger Ladungsdichte unter Pektin hohen Methoxylgehalts, Guargummi, Xanthangummi und Kombinationen davon ausgewählt ist,
wobei die Emulsion gießbar oder löffelbar ist und
wobei sich der Ausdruck Polysaccharid niedriger Ladungsdichte auf das Polysaccharid bezieht, das weniger als 0,48 Mol Ladung pro Mol Monosaccharid bei einem pH in dem Bereich von 5,2 bis 8,0 enthält, wobei das Verfahren umfasst Kombinieren von:
• fein gemahlenen Hülsenfrüchtesamen,
• Nicht-Stärke-Polysaccharid niedriger Ladungsdichte,
• Wasser,
• Öl und
• gegebenenfalls weiteren Bestandteilen,
wobei die fein gemahlenen Hülsenfrüchtesamen mit Wasser kombiniert und auf mindestens 80°C für mindestens 1 Minute, bevor das Öl hinzugegeben wird, erhitzt werden und
wobei das Nicht-Stärke-Polysaccharid nach dem Erhitzen und vor der Zugabe des Öls hinzugegeben wird.

2. Verfahren nach Anspruch 1, wobei die fein gemahlenen Hülsenfrüchtesamen von Hülsenfrüchtesamen erhalten werden, die unter Linsen, Kichererbsen, Bohnen und Kombinationen davon ausgewählt sind.

3. Öl-in-Wasser-Emulsion, umfassend 3-60 Gew.-% einer dispergierten Ölphase und 40-97 Gew.-% einer kontinuierlichen wässrigen Phase mit einem pH von 5,2-8,0, wobei die Emulsion, bezogen auf das Gewicht der wässrigen Phase, enthält:
• 0,5-5 Gew.-% gelatinierte Stärke,
• 0,05-2 Gew.-% Albumin von Hülsenfrüchtesamen und
• 0,1-2 Gew.-% eines Nicht-Stärke-Polysaccharids niedriger Ladungsdichte,
wobei das Nicht-Stärke-Polysaccharid niedriger Ladungsdichte unter Pektin hohen Methoxylgehalts, Guargummi, Xanthangummi und Kombinationen davon ausgewählt ist,
wobei die Emulsion gießbar oder löffelbar ist und
wobei sich der Begriff Polysaccharid niedriger Ladungsdichte auf das Polysaccharid bezieht, das weniger als 0,48 Mol Ladung pro Mol Monosaccharid bei einem pH in dem Bereich von 5,2 bis 8,0 enthält,
wobei die Öl-in-Wasser-Emulsion durch das Verfahren nach Anspruch 1 oder 2 erhältlich ist.

4. Emulsion nach Anspruch 1, wobei die gelatinierte Stärke und das Albumin von Hülsenfrüchtesamen von den gleichen Hülsenfrüchtesamen stammen.

5. Emulsion nach irgendeinem der vorhergehenden Ansprüche, wobei die Stärke und das Albumin von Hülsenfrüchtesamen in der Emulsion in einem Gewichtsverhältnis von 30:1 bis 1:1 enthalten sind.

6. Emulsion nach irgendeinem der vorhergehenden Ansprüche, wobei die Emulsion 1-18%, berechnet als Trockenmasse, bezogen auf das Gewicht der wässrigen Phase, fein gemahlene Hülsenfrüchtesamen enthält.

7. Emulsion nach Anspruch 6, wobei die Hülsenfrüchtesamen unter Linsen, Kichererbsen, Bohnen und Kombinationen davon ausgewählt sind.

8. Emulsion nach irgendeinem der vorhergehenden Ansprüche, wobei 50-100 Gew.-% der Stärke, von der Emulsion umfasst, gelatinierte Stärke sind.

9. Emulsion nach irgendeinem der vorhergehenden Ansprüche, wobei die Emulsion 0,15-3,75 Gew.-% Globulin von Hülsenfrüchtesamen enthält.

10. Verfahren zur Herstellung eines Lebensmittelproduktes, umfassend 1-100 Gew.-% einer Öl-in-Wasser-Emulsion, wobei das Verfahren das Erhitzen des Lebensmittelproduktes auf eine Temperatur über 90°C hinaus für mindestens 5 Minuten umfasst,
wobei die Öl-in-Wasser-Emulsion 3-60 Gew.-% einer dispergierten Ölphase und 40-97 Gew.-% einer kontinuierlichen wässrigen Phase mit einem pH von 5,2-8,0 umfasst, wobei die Emulsion, bezogen auf das Gewicht der wässrigen Phase, enthält:
• 0,5-5 Gew.-% gelatinierte Stärke,
• 0,05-2 Gew.-% Albumin von Hülsenfrüchtesamen und
• 0,1-2 Gew.-% eines Nicht-Stärke-Polysaccharids niedriger Ladungsdichte,
wobei sich der Ausdruck Polysaccharid niedriger Ladungsdichte auf das Polysaccharid bezieht, das weniger als 0,48 Mol Ladung pro Mol Monosaccharid bei einem pH in dem Bereich von 5,2 bis 8,0 enthält.

11. Verwendung einer Öl-in-Wasser-Emulsion zur Herstellung eines zusammengesetzten Lebensmittels, wobei die Verwendung das Erhitzen einer Kombination eines Lebensmittelsubstrats und der Emulsion auf eine Temperatur von mehr als 90°C für mindestens 5 Minuten umfasst,
wobei die Öl-in-Wasser-Emulsion 3-60 Gew.-% einer dispergierten Ölphase und 40-97 Gew.-% einer kontinuierlichen wässrigen Phase mit einem pH von 5,2-8,0 umfasst, wobei die Emulsion, bezogen auf das Gewicht der wässrigen Phase, enthält:
• 0,5-5 Gew.-% gelatinierte Stärke,
• 0,05-2 Gew.-% Albumin von Hülsenfrüchtesamen und
• 0,1-2 Gew.-% eines Nicht-Stärke-Polysaccharids niedriger Ladungsdichte und
wobei sich der Ausdruck Polysaccharid niedriger Ladungsdichte auf das Polysaccharid bezieht, das weniger als 0,48 Mol Ladung pro Mol Monosaccharid bei einem pH in dem Bereich von 5,2 bis 8,0 enthält.

## Revendications

1. Procédé de préparation d'une émulsion huile-dans-eau,
dans lequel l'émulsion huile-dans-eau comprend 3-60 % en masse d'une phase d'huile dispersée et 40-97 % en masse d'une phase aqueuse continue ayant un pH de 5,2-8,0, ladite émulsion contenant en masse de phase aqueuse :
• 0,5-5 % en masse d'amidon gélatinisé ;
• 0,05-2 % en masse d'albumine de graine de légumineuse ; et
• 0,1-2 % en masse d'un polysaccharide de non-amidon de faible densité de charge,
dans lequel le polysaccharide de non-amidon de faible densité de charge est choisi parmi de la méthoxypectine élevée, de la gomme guar, de la gomme xanthane et des combinaisons de celles-ci,
dans lequel l'émulsion peut être versée ou prélevée à la cuillère, et
dans lequel le terme polysaccharide de faible densité de charge fait référence au polysaccharide contenant moins de 0,48 mole de charge par mole de monosaccharide à un pH dans l'intervalle de 5,2 à 8,0, ledit procédé comprenant la combinaison :
• de graine de légumineuse finement broyée ;
• de polysaccharide de non-amidon de faible densité de charge ;
• d'eau ;
• d'huile ; et
• éventuellement d'autres ingrédients,
dans lequel la graine de légumineuse finement broyée est combinée avec de l'eau et chauffée jusqu'à au moins 80 °C pendant au moins 1 minute avant que l'huile soit ajoutée ; et
dans lequel le polysaccharide de non-amidon est ajouté après le chauffage et avant l'addition d'huile.

2. Procédé selon la revendication 1, dans lequel la graine de légumineuse finement broyée est obtenue à partir d'une graine de légumineuse choisie parmi des lentilles, des pois chiches, des haricots et des combinaisons de ceux-ci.

3. Emulsion huile-dans-eau comprenant 3-60 % en masse d'une phase d'huile dispersée et 40-97 % en masse d'une phase aqueuse continue ayant un pH de 5,2-8,0, ladite émulsion contenant en masse de phase aqueuse :
• 0,5-5 % en masse d'amidon gélatinisé ;
• 0,05-2 % en masse d'albumine de graine de légumineuse ; et
• 0,1-2 % en masse d'un polysaccharide de non-amidon de faible densité de charge,
dans laquelle le polysaccharide de non-amidon de faible densité de charge est choisi parmi de la méthoxylpectine élevée, de la gomme guar, de la gomme xanthane et des combinaisons de celles-ci,
dans laquelle l'émulsion peut être versée ou prélevée à la cuillère, et dans laquelle le terme polysaccharide de faible densité de charge fait référence au polysaccharide contenant moins de 0,48 mole de charge par mole de monosaccharide à un pH dans l'intervalle de 5,2 à 8,0,
dans laquelle l'émulsion huile-dans-eau peut être obtenue par le procédé selon la revendication 1 ou 2.

4. Emulsion selon la revendication 1, dans laquelle l'amidon gélatinisé et l'albumine de graine de légumineuse proviennent de la même graine de légumineuse.

5. Emulsion selon l'une quelconque des revendications précédentes, dans laquelle l'amidon et l'albumine de graine de légumineuse sont contenus dans l'émulsion dans un rapport massique de 30:1 à 1:1.

6. Emulsion selon l'une quelconque des revendications précédentes, dans laquelle l'émulsion contient 1-18 %, calculé comme matière sèche, en masse de la phase aqueuse de graine de légumineuse finement broyée.

7. Emulsion selon la revendication 6, dans laquelle les graines de légumineuses sont choisies parmi des lentilles, des pois chiches, des haricots et des combinaisons de ceux-ci.

8. Emulsion selon l'une quelconque des revendications précédentes, dans laquelle 50-100 % en masse de l'amidon compris dans l'émulsion sont de l'amidon gélatinisé.

9. Emulsion selon l'une quelconque des revendications précédentes, dans laquelle l'émulsion contient 0,15-3,75 % en masse de globuline de graine de légumineuse.

10. Procédé de préparation d'un produit alimentaire comprenant 1-100 % en masse d'une émulsion huile-dans-eau, ledit procédé comprenant le chauffage du produit alimentaire à une température excédant 90 °C pendant au moins 5 minutes,
dans lequel l'émulsion huile-dans-eau comprend 3-60 % en masse d'une phase d'huile dispersée et 40-97 % en masse d'une phase aqueuse continue ayant un pH de 5,2-8,0, ladite émulsion contenant en masse de phase aqueuse :
• 0,5-5 % en masse d'amidon gélatinisé ;
• 0,05-2 % en masse d'albumine de graine de légumineuse ; et
• 0,1-2 % en masse d'un polysaccharide de non-amidon de faible densité de charge, et
dans lequel le terme polysaccharide de faible densité de charge fait référence au polysaccharide contenant moins de 0,48 mole de charge par mole de monosaccharide à un pH dans l'intervalle de 5,2 à 8,0.

11. Utilisation d'une émulsion huile-dans-eau pour la préparation d'un aliment composite, ladite utilisation comprenant le chauffage d'une combinaison d'un substrat alimentaire et de l'émulsion à une température excédant 90 °C pendant au moins 5 minutes,
dans laquelle l'émulsion huile-dans-eau comprend 3-60 % en masse d'une phase d'huile dispersée et 40-97 % en masse d'une phase aqueuse continue ayant un pH de 5,2-8,0, ladite émulsion contenant en masse de phase aqueuse :
• 0,5-5 % en masse d'amidon gélatinisé ;
• 0,05-2 % en masse d'albumine de graine de légumineuse ; et
• 0,1-2 % en masse d'un polysaccharide de non-amidon de faible densité de charge, et
dans laquelle le terme polysaccharide de faible densité de charge fait référence au polysaccharide contenant moins de 0,48 mole de charge par mole de monosaccharide à un pH dans l'intervalle de 5,2 à 8,0.
